(19) Europäisches Patentamt
European Patent Office
Office européen des brevets

(11) EP 2 385 073 A1

(12) EUROPEAN PATENT APPLICATION

(43) Date of publication:
09.11.2011 Bulletin 2011/45

(51) Int Cl.:
C08F 10/00 (2006.01)     C08F 4/6592 (2006.01)

(21) Application number: 10162257.9

(22) Date of filing: 07.05.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

(71) Applicant: Borealis AG
1220 Vienna (AT)

(72) Inventors:
• Valonen, Jenni
  04260, Kerava (FI)
• Heiskanen, Harri
  02180, Espoo (FI)

(74) Representative: Lux, Berthold et al
Maiwald Patentanwalts GmbH
Elisenhof
Elisenstraße 3
80335 München (DE)

(54) **Process for the preparation of a solid metallocene catalyst system and its use in polymerisation of olefins**

(57)     Process for the preparation of a solid olefin polymerisation catalyst system, comprising an organometallic compound of a transition metal of Group 3 to 10 of the Periodic Table (IUPAC 2007) in the form of solid particles comprising the steps of

a) preparing a solution (A) comprising

a1) a transition metal compound of formula (I)

$$L_nR_nMX_q \qquad (I)$$

wherein

"M" is a transition metal of anyone of the groups 3 to 10 of the periodic table (IUPAC 2007), preferably a transition metal of anyone of the groups 4 to 6 of the periodic table (IUPAC 2007), more preferably titanium (Ti), zirconium (Zr) or hafnium (Hf), i.e. zirconium (Zr) or hafnium (Hf),

each "X" is independently a monovalent σ-ligand,

each "L" is independently an organic ligand which coordinates to the transition metal (M),

"R" is a bridging group linking said organic ligands (L),"m" is 2 or 3, preferably 2,

"n" is 0, 1 or 2, preferably 1,

"q" is 1, 2 or 3, preferably 2,

m+q is equal to the valency of the transition metal (M),

a2) a cocatalyst comprising an element of group 13 of the Periodic Table (IUPAC 2007), preferably a cocatalyst (Co) comprising a compound of Al and

a3) a solvent (A-1),

b) preparing a liquid/liquid emulsion system by dispersing the solution (A) in a solvent (B) wherein

b1) the solvent (B) constitutes the continuous phase of the emulsion and comprises a nonreactive fluorinated synthetic oil like a perfluoropolyether, a polytrichlorofluoroethylene, a fluorosilicone, or combinations thereof, having a viscosity at 20˚C of at least 10 cSt according to ASTM D445

b2) the solution (A) constitutes in the form of droplets the dispersed phase and

b3) the transition metal compound of formula (I) and the cocatalyst (Co) are present in the droplets,

c) solidifying said dispersed phase to convert said droplets to solid particles and

d) optionally recovering said particles to obtain said catalyst system.

EP 2 385 073 A1

## Description

This invention relates to an improved process for the preparation of a solid metallocene catalyst system with emulsion/solidification technology using a nonreactive fluorinated synthetic oil having a viscosity at 20˚C according to ASTM D445 of at least 10 cSt as continuous phase in catalyst preparation and to the use of the catalyst system in olefin polymerisation.

## Background art

Many catalysts and processes are known for the preparation of olefin polymers. Ziegler-Natta (ZN) catalyst compositions and chromium oxide compounds have, for example, been found to be useful in the preparation of polyolefins.

Further the use of metallocene catalysts in olefin polymerisation has been known for many years and has been found to afford polymer properties not easily available by using ZN-catalysts. Metallocene compounds/procatalysts are conventionally activated using a cocatalyst such as an aluminoxane known from the literature to form the active metallocene catalyst species.

The first single-site catalysts to be developed were homogeneous, i.e. they were used in solution in the polymerisation reaction. Due to the many drawbacks of homogeneous solution systems, several different approaches have been used to try to overcome the problems of the solution catalyst systems. Nowadays the widely used catalyst systems comprise heterogeneous catalysts, wherein catalyst components are supported on an external carrier. Such catalyst systems are described for example by Severn et al., Chem. Rev. 2005; 105(11); 4073-4147 or in the Handbook Tailor-Made Polymers: Via Immobilization of Alpha-Olefin Polymerisation Catalysts of Severn et al..

The carriers used have a porous structure in order to facilitate catalyst impregnation of the support. Carrier materials are typically polymeric or inorganic supports, most typically silica, alumina or magnesium dichloride based materials.

However, the use of an external support involves additional costs, the quality of the support must be carefully controlled and polymers made using supported catalysts can contain carrier residues which cause some problems.

For example, in film applications this is an important feature, since for polymers made by using such supported catalysts, the carrier residues may be visible in the film.

In recent years solid metallocene catalyst systems, providing the advantages of both homogenous and heterogeneous catalysts, were developed by using an emulsion/solidification technology for their preparation without using an external carrier, as for example disclosed in WO 03/051934.

The preparation of this kind of catalyst systems by using an emulsion/solidification technology is based on a liquid/liquid emulsion system comprising at least two phases, whereby the catalyst particles are separated out of the dispersed phase of the emulsion via solidification.

As is disclosed in WO 03/051934 such a process comprises the formation of an emulsion, wherein the continuous phase, in which a solution of the catalyst components forms the dispersed phase in the form of droplets, is immiscible with said catalyst component solution and is selected from halogenated organic solvents, and subsequent solidification of said droplets, comprising the catalyst components, dispersed in a continuous phase of the formed emulsion.

According to the description of WO 03/051934 the continuous phase preferably comprises a halogenated organic solvent, particularly a fluorinated organic solvent and/or a functionalized derivative thereof, still more preferably the solvent comprises a semi-, highly- or perfluorinated hydrocarbon and/or a functionalized derivative thereof.

It is in particular preferred, that said solvent comprises, preferably consists of, a perfluorohydrocarbon or a functionalized derivative thereof, preferably $C_3$-$C_{30}$-perfluoroalkanes, -alkenes or -cycloalkanes, more preferred $C_4$-$C_{10}$-perfluoroalkanes, -alkenes or -cycloalkanes, particularly preferred perfluorohexane, perfluoroheptane, perfluorooctane or perfluoro (dimethylcyclohexane) or a mixture thereof.

According to the method described such catalyst systems are prepared by emulsifying the catalyst solution into cold fluorous hydrocarbons, like perfluorooctane (PFO) or perfluoro-1,3-dimethylcyclohexane (PFC) and then solidifying the droplets by mixing the emulsion with hot PFO or PFC. Solidified particles are then separated from PFO or PFC and dried with inert gas flow. As PFO and PFC are very easily evaporated some of the solvent might be lost in this process. Furthermore PFO and PFC are quite expensive solvents so it is not desired to lose any of it during the process.

In addition, in order to obtain such an emulsion, and especially also to preserve the droplet morphology during the solidification step, the use of a surfactant is essential.

According to the description of WO 03/051934 the surfactant is preferably based on hydrocarbons (including polymeric hydrocarbons with a molecular weight e.g. up to 10 000) optionally interrupted with (a) heteroatom(s), preferably halogenated hydrocarbons optionally having a functional group, preferably semi-, highly- or perfluorinated hydrocarbons as known in the art.

Alternatively and as shown in cited prior art documents, the surfactant is prepared in-situ by reacting a surfactant precursor with a compound of the catalyst solution. Said surfactant precursor may be a halogenated hydrocarbon with at least one functional group, e.g. a highly fluorinated $C_1$ to $C_{30}$ alcohol having at least one functional group selected from -OH, -SH, - $NH_2$, -COOH, -$COONH_2$, oxides of alkenes, oxo-groups and/or any reactive derivative of these groups, which reacts e.g. with a cocatalyst component, such as aluminoxane.

The use of surfactants improves essentially the preparation process and has clear benefit for the catalyst morphology. However, in some cases surfactants might be not effective enough in stabilizing the emulsion and consequently the morphology is not preserved on the desired level. In addition controlling of the processes for in-situ formation of the surfactant might be demanding due to the many factors effecting the final result.

In addition, the use of such highly reactive fluorinated compounds is considered problematic from HS&E (Health, Safety & Environment) point of view, so that the availability of these compounds in the future is not guaranteed.

Thus there is a strong need to develop improved methods for preparing solid metallocene catalyst systems, however without any external support, with the emulsion/solidification technology using simplified method and more sustainable starting materials, which will be easily available and convenient to be used in the process.

It was therefore an object of the invention to provide an improved and suitable process for preparing solid metallocene catalyst with the emulsion/solidification technology, where alternative materials in catalyst preparation are used and which yields spherical catalyst systems having excellent catalytic activity allowing the production of polymers with good polymer particle morphology.

This object was achieved by using as solvent for the continuous phase a nonreactive fluorinated synthetic oil having a viscosity at 20°C according to ASTM D445 of at least 10 cSt, in a process for preparing solid metallocene catalyst systems using the emulsion/solidification technology, whereby the addition of a separate surfactant is avoided. Examples for such fluorinated synthetic oils, but not restricted thereto, are fluorinated polyethers, fluor- and chlorinated polyethylenes, fluorinated silicones and combinations thereof.

Thus the present invention is therefore directed to a process for the preparation of a solid olefin polymerisation catalyst system, comprising an organometallic compound of a transition metal of Group 3 to 10 of the Periodic Table (IUPAC 2007) in the form of solid particles comprising the steps of

a) preparing a solution (A) comprising

a1) a transition metal compound of formula (I)

$$L_mR_nMX_q \qquad (I)$$

wherein

"M" is a transition metal of anyone of the groups 3 to 10 of the periodic table (IUPAC 2007), preferably a transition metal of anyone of the groups 4 to 6 of the periodic table (IUPAC 2007), more preferably titanium (Ti), zirconium (Zr) or hafnium (Hf), i.e. zirconium (Zr) or hafnium (Hf),
each "X" is independently a monovalent σ-ligand,
each "L" is independently an organic ligand which coordinates to the transition metal (M),
"R" is a bridging group linking said organic ligands (L),
"m" is 2 or 3, preferably 2,
"n" is 0, 1 or 2, preferably 1,
"q" is 1, 2 or 3, preferably 2,
m+q is equal to the valency of the transition metal (M),

a2) a cocatalyst comprising an element of group 13 of the Periodic Table (IUPAC 2007), preferably a cocatalyst (Co) comprising a compound of Al and
a3) a solvent (A-1),

b) preparing a liquid/liquid emulsion system by dispersing the solution (A) in a solvent (B) wherein

b1) the solvent (B) constitutes the continuous phase of the emulsion and comprises a nonreactive fluorinated synthetic oil having a viscosity at 20°C according to ASTM D445of at least 10 cSt
b2) the solution (A) constitutes in the form of droplets the dispersed phase and
b3) the transition metal compound of formula (I) and the cocatalyst (Co) are present in the droplets,

c) solidifying said droplets to obtain solid particles and
d) optionally recovering said particles to obtain said catalyst system.

Thus, an additional object of the invention is the use of solvent (B) as defined here below in the formation and stabilisation of an emulsion used in the catalyst system preparation.

It is especially notable that the specific selected solvent (B) used in the preparation of the catalyst system according to the present invention, are e.g. in HS&E point of view, convenient materials.

In addition it should be noted that the specific solvent (B) used according to the present invention is not volatile, which makes it easy and safe to handle.

A further finding of the present invention is that very stable emulsions are formed without the need of adding a separate surfactant and that spherical catalyst particles showing a narrow particle size distribution can be produced.

As an additional advantage it can be mentioned that the process according to the present invention can be carried out in a simplified way, e.g. in only one vessel and with a simplified solidification step, as disclosed in more detail below.

Therefore, the present inventive preparation method represents an economically attractive alternative for the preparation of such kind of catalyst systems as described here.

The term "solution" throughout the present application indicates that two or more substances are homogenously mixed. At least one of the substances is a solvent in which the other substances (the solutes) are dissolved. In the instant invention the solvent of the solution (A) is the solvent (A-1) as defined in more detail below, whereas the solutes of the solution (A) are at least the transition metal compound of formula (I) and the cocatalyst (Co).

An "emulsion" according to this invention is a mixture of two liquid substances. One substance (the dispersed phase) is dispersed in the other (the continuous phase) as droplets. In the present application the continuous phase is the solvent (B) and the dispersed phase (in the form of droplets) is the solution (A) containing the catalyst components.

More precisely, the solvent (A-1) of the present invention is a solvent which dissolves the components of the catalyst system, i.e. at least the transition metal compound of formula (I) and the cocatalyst (Co). Preferably the solvent (A-1) is an organic solvent (A-1). More preferably the organic solvent (A-1) is selected from the group consisting of a linear alkane, cyclic alkane, linear alkene, cyclic alkene, aromatic hydrocarbon, like toluene, benzene, ethylbenzene, propylbenzene, butylbenzene and/or xylene, and halogen-containing hydrocarbons. Toluene is in particular preferred as solvent (A-1) to form the solution (A) with the components of the catalyst system.

Solvent (B) is according to the invention a nonreactive fluorinated synthetic oil having a viscosity at 20°C according to ASTM D445 of at least 10 cSt, wherein solution (A) forms the dispersed phase. Solvent (B) may be immiscible with the solution (A) at least at the conditions (e. g. temperatures) used during the dispersing step (b).

Examples for such fluorinated synthetic oils, but not restricted thereto, are fluorinated polyethers, fluor- and chlorinated polyethylenes, fluorinated silicones and combinations thereof.

Preferred examples are perfluoropolyethers, polytrichlorofluoroethylenes, fluorosilicones, or combinations thereof.

Solvent (B) is defined below in more detail.

The term "immiscible with the solution (A)" means that the solvent (B) is fully immiscible or partly immiscible i.e. not fully miscible with the dispersed phase solution (A).

Preferably said solvent (B) is inert in relation to the compounds of the catalyst system to be produced. The term "inert in relation to the compounds" means herein that the solvent (B) of the continuous phase is chemically inert, i.e. undergoes no chemical reaction with any catalyst system forming compound or catalyst system precursor forming compound (e.g. the transition metal compound of formula (I) and the cocatalyst (Co)). Thus, the solid particles of the catalyst system or any precursor thereof are formed in the droplets from the compounds which originate from the dispersed phase, i.e. are provided to the emulsion in the solution (A) dispersed into the continuous phase forming solvent (B).

It is preferred that the catalyst system compounds(s) used for forming the solid catalyst system (e.g. the transition metal compound of formula (I) and the cocatalyst (Co)), are not soluble in the solvent (B). Preferably, said catalyst system compounds(s) (e.g. the transition metal compound of formula (I) and the cocatalyst (Co)) are essentially insoluble in said continuous phase forming solvent (B).

The solvents (B) used according to the present invention are chemically inert and very poor solvents for compounds such as for the solvent (A-1) and the catalyst system compounds. Accordingly the reactive compounds (e.g. the transition metal compound of formula (I) and the cocatalyst (Co)) can be kept within the droplet phase so that no relevant reactions in the continuous phase occur, which would worsen the morphology of the solidified catalyst system particles.

The finding of the present invention is that a specific solvent (B) must be used for forming the emulsion. After the formation of the emulsion system, said catalyst system is formed in situ from the catalyst system compounds, i.e. the transition metal compound of formula (I) and the cocatalyst (Co), in said solution (A).

The solvent (B) is according to the invention a nonreactive fluorinated synthetic oil having a viscosity at 20°C according to ASTM D445 of at least 10 cSt, as defined below in more detail. Examples for such fluorinated synthetic oils, but not restricted thereto, are fluorinated polyethers, fluor- and chlorinated polyethylenes, fluorinated silicones and combinations thereof.

Preferred examples of fluorinated synthetic oils are perfluoropolyethers, polytrichlorofluoroethylenes, fluorosilicones, or combinations thereof.

In the first step of the process according to the invention a solution of catalyst components is formed.

According to the invention the catalyst components include the transition metal compound of formula (I) $L_m$-$R_nMX_q$ and the cocatalyst (Co).

In the formula (I) "M" is a transition metal of anyone of the groups 3 to 10 of the periodic table (IUPAC 2007), preferably a transition metal of anyone of the groups 4 to 6 of the periodic table (IUPAC 2007), more preferably titanium (Ti), zirconium (Zr) or hafnium (Hf), i.e. zirconium (Zr) or hafnium (Hf),

each "X" is independently a monovalent σ-ligand,

each "L" is independently an organic ligand which coordinates to the transition metal (M),

"R" is a bridging group linking said organic ligands (L),

"m" is 2 or 3, preferably 2,

"n" is 0, 1 or 2, preferably 1,

"q" is 1, 2 or 3, preferably 2,

m+q is equal to the valency of the transition metal (M)

The transition metal compound of formula (I) $L_mR_nMX_q$ includes symmetric compounds as well as asymmetric compounds, where at least two ligands "L" are of different chemical structure.

Each organic ligand (L) is preferably independently

(a) a substituted or unsubstituted cycloalkyldiene, preferably a cycloalkyldiene selected from the group consisting of unsubstituted cyclopentadiene, substituted cyclopentadiene, monofused derivative of a cyclopentadiene, bifused derivative of a cyclopentadiene and multifused derivative of a cyclopentadiene, or

(b) an acyclic $\eta^1$-, an acyclic $\eta^2$-, an acyclic $\eta^3$-, an acyclic $\eta^4$- or an acyclic $\eta^6$-ligand composed of atoms from Groups 13 to 16 of the periodic table (IUPAC 2007), preferably an acyclic $\eta^1$-, an acyclic $\eta^2$-, an acyclic $\eta^3$-, an acyclic $\eta^4$- or an acyclic $\eta^6$-ligand composed of atoms from Groups 13 to 16 of the periodic table (IUPAC 2007) in which the open chain ligand may be fused with one or two, preferably two, aromatic or non-aromatic rings and/or bear further substituents, or

(c) a cyclic σ-, cyclic $\eta^1$-, a cyclic $\eta^2$-, a cyclic $\eta^3$-, a cyclic $\eta^4$- or a acyclic $\eta^6$-, mono-, bi-or multidentate ligand composed of unsubstituted or substituted mono-, bi- or multicyclic ring systems selected from aromatic or non-aromatic or partially saturated ring systems and containing carbon ring atoms.

More preferably at least one of the organic ligands (L) is selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

Further in case the organic ligands (L) are substituted it is preferred that at least one organic ligand (L) comprises

(a) one or more residues independently selected from the group consisting of halogen, $C_1$ to $C_{10}$ alkyl, $C_2$ to $C_{20}$ alkenyl, $C_2$ to $C_{20}$ alkinyl, $C_3$ to $C_{12}$ cycloalkyl, $C_6$ to $C_{20}$ aryl, $C_7$ to $C_{20}$ arylalkyl, $C_3$ to $C_{12}$ cycloalkyl which contains 1, 2, 3 or 4 heteroatom(s) in the ring moiety, $C_6$ to $C_{20}$ heteroaryl and $C_1$ to $C_{20}$ haloalkyl,

or more preferably

(b) one or more residues independently selected from the group consisting of halogen, $C_1$ to $C_{10}$ alkyl, $C_3$ to $C_{12}$ cycloalkyl, $C_6$ to $C_{20}$ aryl, $C_7$ to $C_{20}$-arylalkyl, $C_3$ to $C_{12}$ cycloalkyl which contains 1, 2, 3 or 4 heteroatom(s) in the ring moiety, $C_6$ to $C_{20}$ heteroaryl and $C_1$ to $C_{20}$ haloalkyl.

By "σ-ligand" is meant throughout the invention a group bonded to the transition metal (M) at one or more places via a sigma bond.

Further the ligands (X) are preferably independently selected from the group consisting of hydrogen, halogen, $C_1$ to $C_{20}$ alkyl, $C_1$ to $C_{20}$ alkoxy, $C_2$ to $C_{20}$ alkenyl, $C_2$ to $C_{20}$ alkynyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", -PR"$_3$, -SiR"$_3$, -OSiR"$_3$ and -NR"$_2$, wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl.

Additionally the bridging group (R) may a bridge of 1 to 7 atoms length, preferably with at least one heteroatom. It is in particular appreciated that the bridging group(s) (R) has(have) the formula (II)

$$-Y(R')(R'')- \qquad (II)$$

wherein

Y is carbon (C), silicon (Si) or germanium (Ge), and

R', R" are independently selected from the group consisting of is $C_1$ to $C_{20}$ alkyl, $C_4$ to $C_{10}$ cycloalkyl, $C_6$ to $C_{12}$ aryl, $C_7$ to $C_{12}$ arylalkyl, or trimethylsilyl.

According to a preferred embodiment said transition metal compound of formula (I) is a group of compounds known as metallocenes. Said metallocenes bear at least one organic ligand, generally 1, 2 or 3, e.g. 1 or 2, which is η-bonded to the metal, e.g. a $n^2$ - to $η^6$-ligand, such as a $n^5$-ligand.

Preferably, a metallocene according to this invention is a transition metal of anyone of the groups 4 to 6 of the periodic table (IUPAC 2007), suitably titanocene, zirconocene or hafnocene, which contains at least one $n^5$-ligand, which is an optionally substituted cyclopentadienyl, an optionally substituted indenyl, an optionally substituted tetrahydroindenyl or an optionally substituted fluorenyl. Thus the transition metal compound has preferably the formula (III)

$$(Cp)_2R_nMX_2 \qquad (III)$$

wherein

"M" is zirconium (Zr), hafnium (Hf), or titanium (Ti), preferably zirconium (Zr) or hafnium (Hf), each "X" is independently a monovalent anionic σ-ligand, preferably selected from the group consisting of hydrogen, halogen, $C_1$ to $C_{20}$ alkyl, $C_1$ to $C_{20}$ alkoxy, $C_2$ to $C_{20}$ alkenyl, $C_1$ to $C_{20}$ alkynyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", -PR"$_3$, -SiR"$_3$, -OSiR"$_3$ and -NR"$_2$, wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl, more preferably each "X" is Cl,

each "Cp" is independently an unsaturated organic cyclic ligand which coordinates to the transition metal (M),

"R" is a bridging group linking two organic ligands (L), preferably the bridging group (R) has the formula (II)

"n" is 0 or 1, preferably 1, and

at least one "Cp"-ligand is selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl, preferably substituted indenyl.

The transition metal compound of formula (III) $(Cp)_2R_nMX_2$ includes symmetric compounds as well as asymmetric compounds, where both Cp-ligands are of different chemical structure.

The substituted Cp-ligand(s) may have one or more substituent(s) being selected form the group consisting of halogen, hydrocarbyl (e.g. linear $C_1$ to $C_{20}$ alkyl, branched $C_3$ to $C_{20}$ alkyl, linear $C_1$ to $C_{20}$ alkenyl, branched $C_4$ to $C_{20}$ alkenyl, $C_2$ to $C_{20}$ alkinyl, $C_3$ to $C_{12}$ cycloalkyl, $C_1$ to $C_{20}$ alkyl substituted $C_5$ to $C_{20}$ cycloalkyl, $C_5$ to $C_{20}$ cycloalkyl substituted $C_1$ to $C_{20}$ alkyl wherein the cycloalkyl residue is substituted by $C_1$ to $C_{20}$ alkyl, $C_6$ to $C_{20}$ aryl, $C_7$ to $C_{20}$ arylalkyl, $C_3$ to $C_{12}$-cycloalkyl which contains 1, 2, 3 or 4 heteroatom(s) in the ring moiety, $C_6$ to $C_{20}$-heteroaryl, $C_1$ to $C_{20}$-haloalkyl, -SiR"$_3$, -SR", -PR"$_2$ or -NR"$_2$, each R" is independently a hydrogen or hydrocarbyl (e. g. $C_1$ to $C_{20}$ alkyl, $C_1$ to $C_{20}$ alkenyl, $C_2$ to $C_{20}$ alkinyl, $C_3$ to $C_{12}$ cycloalkyl, or $C_6$ to $C_{20}$ aryl) or e.g. in case of-NR"$_3$, the two substituents R" can form a ring, e.g. five-or six-membered ring, together with the nitrogen atom wherein they are attached to.

Further "R" of formula (III) is preferably a bridge of 1 to 7 atoms, e. g. a bridge of 1 to 4 C-atoms and 0 to 4 heteroatoms, wherein the heteroatom(s) can be e.g. silicon (Si), germanium (Ge) and/or oxygen (O) atom(s), whereby each of the bridge atoms may bear independently substituents, such as $C_1$ to $C_{20}$-alkyl, tri($C_1$ to $C_{20}$-alkyl)silyl, tri($C_1$ to $C_{20}$-alkyl)siloxy or $C_6$ to $C_{20}$-aryl substituents; or a bridge of 1 to 3, e.g. one or two, hetero atoms, such as silicon (Si), germanium (Ge) and/or oxygen (O) atom(s), e.g. -SiR$^1_2$-, wherein each $R^1$ is independently $C_1$ to $C_{20}$-alkyl, $C_4$ to $C_{10}$ cycloalkyl, $C_6$ to $C_{20}$-aryl or tri($C_1$ to $C_{20}$-alkyl)silyl- residue, such as trimethylsilyl-.

The "Cp"-ligand of formula (III) is preferably cyclopentadienyl, indenyl, tetrahydroindenyl or fluorenyl, optionally substituted as defined above and may further bear a fused ring of 3 to 7 atoms, e.g. 4, 5 or 6, which ring may be aromatic or partially saturated.

In a suitable subgroup of the compounds of formula (III) each "Cp"-ligand independently bears one or more, like 2, substituents selected from $C_1$ to $C_{20}$ alkyl, $C_5$ to $C_{20}$ cycloalkyl substituted $C_1$ to $C_{20}$ alkyl wherein the cycloalkyl residue is substituted by $C_1$ to $C_{20}$ alkyl, $C_6$ to $C_{20}$-aryl, $C_7$ to $C_{20}$-arylalkyl (wherein the aryl ring alone or as a part of a further moiety may further be substituted as indicated above), wherein R" is as indicated above, preferably $C_1$ to $C_{20}$-alkyl,

the ligand "X" is hydrogen (H), halogen, $C_1$ to $C_{20}$-alkyl, $C_1$ to $C_{20}$-alkoxy, $C_6$ to $C_{20}$-aryl, $C_7$ to $C_{20}$-arylalkenyl or -NR"$_2$ as defined above, e.g. -N($C_1$ to $C_{20}$-alkyl)$_2$, and

the bridging group "R" is a methylene, ethylene or a silyl bridge, whereby the silyl can be substituted as defined above, e.g. a dimethylsilyl=, methylphenylsilyl=, methylcylohexylsilyl=, or trimethylsilylmethylsilyl= -bridge.

A specific subgroup includes the well known metallocenes of Zr, Hf and Ti with one or two, e.g. two, organic ligands (L) which may be bridged or unbridged cyclopentadienyl ligands optionally substituted with e.g. siloxy, alkyl and/or aryl as defined above, or with two unbridged or bridged indenyl ligands optionally substituted in any of the ring moieties with e.g. alkyl and/or aryl as defined above, e.g. at 2-, 3-, 4- and/or 7-positions. As specific examples e.g. bis (alkylcyclopentadienyl) Zr (or Ti or Hf) dihalogenides can be mentioned, such as bis-(n-butylcyclopentadienyl)ZrCl$_2$ and bis-(n-butylcyclopentadienyl)HfCl$_2$, see e.g. EP 129 368. One typical metallocene moiety is rac- R$_2$Si(2-Me-4-Phl-nd)$_2$ZrCl$_2$, wherein each R is independently an linear or cyclic alkyl of 1 to 10 C atoms, and wherein the Ph group can optionally be substituted by an alkyl group of 1 to 10 atoms, as one examples can be mentioned Rac-Me$_2$Si(2-Me-4-Phlnd)$_2$ZrCl$_2$ used in polypropylene polymerisation.

Examples of compounds wherein the metal atom bears a-NR"$_2$ ligand are disclosed i.e. in WO 98/56831 and WO 00/34341. The contents of the documents are incorporated herein by reference. Further metallocenes are described e.g. in EP 260 130. As further examples of usable metallocenes may also be found e.g. from WO 97/28170, WO 98/46616, WO 98/49208, WO 99/12981, WO 99/19335, WO 98/56831, WO 00/34341, EP 423 101 and EP 537 130 as well as V. C. Gibson et al., in Angew. Chem. Int. Ed., engl., vol 38, 1999, pp 428-447, the disclosures of which are incorporated herein by reference.

Said transition metal compounds of formula (I) and (III) being of metallocene type and their preparation are well known in the art. Metallocenes as defined in the instant invention are particularly preferred.

Alternatively, in a further subgroup of the metallocene compounds, the transition metal (M) bears a "Cp"-ligand as defined above and additionally a η$^1$- or η$^2$-ligand, wherein said ligands may or may not be bridged to each other. This subgroup includes so called "scorpionate compounds" (with constrained geometry) in which the transition metal (M) is complexed by a η$^5$-ligand bridged to a η$^1$- or η$^2$-ligand, preferably η$^1$- (for example σ-bonded) ligand, e.g. a metal complex of a "Cp"-ligand as defined above, e.g. a cyclopentadienyl group, which bears, via a bridge member, an acyclic or cyclic group containing at least one heteroatom, e.g. -NR"$_2$ as defined above. Such compounds are described e.g. in WO 96/13529, the contents of which are incorporated herein by reference.

Any alkyl, alkenyl or alkynyl residue referred above alone or as a part of a moiety may be linear or branched, and contain preferably of up to 9, e.g. of up to 6, carbon atoms. Aryl is preferably phenyl or naphthalene. Halogen means F, Cl, Br or I, preferably Cl.

Another subgroup of the transition metal compounds of formula (I) usable in the present invention is known as non-metallocenes wherein the transition metal (M) (preferably a Group 4 to 6 transition metal, suitably Ti, Zr or Hf) has a coordination ligand other than cyclopentadienyl ligand.

The term "non-metallocene" used herein means compounds, which bear no cyclopentadienyl ligands or fused derivatives thereof, but one or more non-cyclopentadienyl η-, or σ-, mono-, bi- or multidentate ligand. Such ligands can be chosen e.g. from

(a) acyclic, η$^1$- to η$^4$- or η$^6$-ligands composed of atoms from Groups 13 to 16 of the periodic table (IUPAC 2007), e.g. an acyclic pentadienyl ligand wherein the chain consists of carbon atoms and optionally one or more heteroatoms from groups 13 to 16 (IUPAC 2007), and in which the open chain ligand may be fused with one or two, preferably two, aromatic or non-aromatic rings and/or bear further substituents (see e.g. WO 01/70395, WO 97/10248 and WO 99/41290), or

(b) cyclic σ-, η$^1$- to η$^4$--or η$^6$-, mono-, bi-or multidentate ligands composed of unsubstituted or substituted mono-, bi-or multicyclic ring systems, e.g. aromatic or non-aromatic or partially saturated ring systems, containing carbon ring atoms and optionally one or more heteroatoms selected from groups 15 and 16 of the periodic table (IUPAC 2007) (see e.g. WO 99/10353).

Bi-or multidentate ring systems include also bridged ring systems wherein each ring is linked via a bridging group, e. g. via an atom from groups 15 or 16 of the periodic table (IUPAC), e.g. N, O or S, to the transition metal (M) (see e.g. WO 02/060963). Such compounds are i.a. transition metal complexes with nitrogen-based, cyclic or acyclic aliphatic or aromatic ligands, e.g. such as those described in WO 99/10353 or in the Review of V. C. Gibson at al., in Angew. Chem. Int. Ed., engl. , vol 38, 1999, pp 428-447, or with oxygen-based ligands, such as group 4 metal complexes bearing bidentate cyclic or acyclic aliphatic or aromatic alkoxide ligands, e.g. optionally substituted, bridged bisphenolic ligands (see i.a. the above review of Gibson et al). Further specific examples of non- η$^5$-ligands are amides, amide-diphosphane, amidinato, aminopyridinate, benzamidinate, azacycloalkenyl, such as triazabicycloalkenyl, allyl, beta-diketimate and aryloxide. The disclosures of the above documents are incorporated herein by reference.

The preparation of metallocenes and non-metallocenes, and the organic ligands thereof, usable in the invention is well documented in the prior art, and reference is made e.g. to the above cited documents. Some of said compounds are also commercially available. Thus, said transition metal compounds can be prepared according to or analogously to the methods described in the literature, e.g. by first preparing the organic ligand moiety and then metallating said organic ligand (η-ligand) with a transition metal. Alternatively, a metal ion of an existing metallocene can be exchanged for another metal ion through transmetallation.

If several different transition metal compounds are used (mixed dual or multicatalyst systems), these can be any combinations of the above transition metal compounds of formula (I) or of the above transition metal compounds of formula (I) with other catalyst compounds (including Ziegler-Natta and chromium oxide systems), e.g. a combination at least of two or more a metallocenes, of a metallocene and a non-metallocene, as well as of a metallocene and/or a non-metallocene with a Ziegler-Natta catalyst system (which comprises typically a transition metal compound and a compound of a metal from Group 2 of the Periodic Table, such as a Mg compound).

As a further requirement the catalyst system according to the present invention contains a cocatalyst (Co), wherein preferably the cocatalyst (Co) comprises an element of group 13 of the Periodic Table (IUPAC 2007). Thus the cocatalyst (Co) comprises for instance aluminium (Al) or boron (B). Preferably the cocatalyst comprises a compound of Al.

Examples of such cocatalysts are organo aluminium compounds, such as trialkyl aluminium compounds and/or aluminoxane compounds.

Preferred as cocatalysts are aluminoxanes, in particular $C_1$-$C_{10}$-alkyl aluminoxanes, most particularly methyl aluminoxane (MAO). Such aluminoxanes can be used as the sole cocatalyst or together with other cocatalyst(s). Thus besides or in addition to aluminoxanes, other cation complex forming catalysts activator compounds (Co), like boron compounds can be used. Said cocatalysts are commercially available or can be prepared according to the prior art literature.

Further aluminoxane cocatalysts are described i.a. in WO 94/28034 which is incorporated herein by reference. These are linear or cyclic oligomers of having up to 40, preferably 3 to 20, -(Al(R''')O)- repeating units (wherein R''' is hydrogen, $C_1$-$C_{10}$-alkyl (preferably methyl) or $C_6$-$C_{18}$-aryl or mixtures thereof).

The use and amounts of such cocatalysts are within the skills of an expert in the field.

In case of preferred aluminoxanes, such as methyl aluminoxane (MAO), the amount of Al, provided by aluminoxane, can be chosen to provide a molar ratio of Al:transition metal e.g. in the range of 1 to 10 000, preferably 10 to 7000, e.g. 100 to 4000, such as 100 to 2000, e.g. 100 to 1000. Typically in case of solid (heterogeneous) catalyst the ratio is preferably below 500, like 100 to 400.

The quantity of cocatalyst to be employed in the catalyst of the invention is thus variable, and depends on the conditions and the particular transition metal compound chosen in a manner well known to a person skilled in the art.

Any additional components to be contained in the solution comprising the transition metal compound of formula (I) may be added to said solution before or, alternatively, after the dispersing step.

As already stated above the catalyst system compounds, i.e. the transition metal compound of formula (I) and the cocatalyst (Co) are dissolved in the solvent (A-1). Preferably the solvent (A-1) is an organic solvent (A-1). More preferably the organic solvent (A-1) is selected from the group consisting of a linear alkane, cyclic alkane, linear alkene, cyclic alkene, aromatic hydrocarbon, like toluene, benzene, ethylbenzene, propylebenzene, butylbenzene and/or xylene, and halogen containing hydrocarbons. Toluene is particular preferred as solvent (A-1) to form the solution (A) with the components of the catalyst system.

In step b) the solution (A) of the catalyst components, i.e. the transition metal compound of formula (I) and the cocatalyst (Co) is dispersed in a solvent (B) to form an emulsion.

According to the invention solvent (B) is a nonreactive fluorinated synthetic oil having a viscosity at 20˚C according to ASTM D445 of at least 10 cSt.

The fluorinated synthetic oil preferably has a viscosity at 20˚C (according to ASTM D445) of at least 30 cSt, more preferably of at least 100 cSt, even more preferably of at least 300 cSt, still more preferably of at least 400 cSt and most preferably of at least 700 cSt.

The upper limit for the viscosity at 20˚C (according to ASTM D445) of the fluorinated synthetic oil used is preferably 2000 cSt, more preferably 1600 cSt and even more preferably 1000 cSt.

As already mentioned suitable examples for such fluorinated synthetic oils, but not restricted thereto, are fluorinated polyethers, fluor- and chlorinated polyethylenes, fluorinated silicones and combinations thereof.

Preferably perfluoropolyethers, polytrichlorofluoroethylenes, fluorosilicones, or combinations thereof are used as fluorinated synthetic oil, more preferably a perfluoropolyether is used.

Any perfluoropolyether having a viscosity at 20˚C (according to ASTM D445) of at least 10 cSt up to 2000 cSt, known to one skilled in the art can be used in the invention composition. A common characteristic of perfluoropolyethers suitable for the present invention is the presence of perfluoroalkyl ether moieties. The term "perfluoropolyether" is exchangeable with "PFPE", "PFPE oil", "PFPE fluid", "PFAE" (perfluoroalkylether) or "PFPAE" (perfluoropolyalkylether), as is known to one skilled in the art.

Suitable perfluoropolyethers are for example described in WO 2007/082046, US 2007/049502, US 6528457, WO 00/18849, etc..

Preferably said perfluoropolyether is selected from the group of perfluoropolyethers having the formula:

CF₃-(CF₂)₂-O-[CF(CF₃)-CF₂-O]s-Rf          (I),

$$F[CF(CF_3)CF_2O]xCF_2CF_3 \qquad (II)$$

$$CF_3O[CF_2CF(CF_3)\text{-}O\text{-}]m(CF_2\text{-}O\text{-})n\text{-}R^1f \qquad (III),$$

$$F\text{-}[(CF_2)_3\text{-}O]t\text{-}R^2f \qquad (IV),$$

$$CF_3O(CF_2CF_2\text{-}O\text{-})p(CF_2\text{-}O)qCF_3 \qquad (V),$$

$$CF_3O[CF_2CF(CF_3)O]m(CF_2CF_2O)o(CF_2O)n\text{-}R^1f \qquad (VI),$$

or combinations of two or more thereof;

s is an integer from 2-100; Rf is CF2CF3, a C3 to C6 perfluoroalkyl group, or combinations thereof; x is an integer from 10 to 60; $R^1f$ is CF3, C2F5, C3F7, or combinations of two or more thereof; (m+n) is 8-45, inclusive; (m+n+o) is 8-45, inclusive; m/n is 20-1000, inclusive; is >1 $R^2f$ is CF3, C2F5, or combinations thereof; t is 2-200, inclusive; (p+q) is 40-180, inclusive; and p/q is 0.5-2, inclusive, provided that the perfluoropolyeether has a viscosity at 20˚C (according to ASTM D445) of at least 10 cSt up to 2000 cSt, preferably of at least 30 cSt up to 1600 cSt and more preferably of at least 100 cSt up to 1000 cSt.

More preferably the perfluoropolyether used has the formula (I) $CF_3\text{-}(CF_2)_2\text{-}O\text{-}[CF(CF_3)\text{-}CF_2\text{-}O]s\text{-}Rf$ or the formula $F[CF(CF_3)CF_2O]xCF_2CF_3$ (II) and a viscosity at 20˚C (according to ASTM D445) of at least 10 cSt up to 2000 cSt, preferably of at least 30 cSt up to 1600 cSt and more preferably of at least 100 cSt up to 1000 cSt.

Most preferably a perfluoropolyether with the formula (II) having a viscosity at 20˚C (according to ASTM D445) of at least 10 cSt up to 2000 cSt, preferably of at least 30 cSt up to 1600 cSt and more preferably of at least 100 cSt up to 1000 cSt is used as solvent (B).

Representative perfluoropolyethers that can be used according to the invention and have one of the above defined formulas (I) to (V) are available on the market under the trade names FOMBLIN® and GALDEN® (from Ausimont, Milan, Italy), KRYTOX® (from E. I. du Pontde Nemours and Company, Wilmington, Delaware), and DEMNUM® (from Daikin, Osaka, Japan).

Thus, useful and commercially available oils are perfluoroepolyethers sold under the trademark Krytox® by E.I. du Pont de Nemours and Company, and particularly oils of Krytox® GPL or FG (food grade Krytox oils) series, which fulfil the viscosity requirements as indicated above, i.e. having a viscosity at 20˚C (according to ASTM D445) of at least 10 cSt, for example Krytox® GPL 102-107 oils.

Krytox® fluorinated oils are a series of low molecular weight, fluorine end-capped, homopolymers of hexafluoropropylene epoxide. The polymer chain is completely saturated and contains only the elements carbon, oxygen and fluorine; hydrogen is not present. On a weight basis, Krytox® contains 21.6% carbon, 9.4% oxygen and 69.0% fluorine.

It should be noted that all nonreactive fluorinated synthetic oils fulfilling the viscosity and other given requirements for being suitable as solvent (B) of the continuous phase can be used in the preparation method according to the present invention.

Suitable processes for dispersing the solution (A) within the solvent (B) to form an emulsion is the use of a mechanical device as well as the use of ultrasound for mixing or by the so called phase change method as described in WO 03/051934 and as known to the skilled person. The process parameters, such as time of mixing, intensity of mixing, type of mixing, power employed for mixing, such as mixer velocity or wavelength of ultrasound employed, viscosity of solvent phase, are used for adjusting the particle size of the catalyst system. After the formation of the emulsion system, said catalyst is formed in situ from the catalyst components in said solution.

In one embodiment solution (A) can be injected under the surface of solvent (B) while mixing and in a further embodiment solution (A) can be injected on top of the surface of solvent (B) before or while mixing.

Regardless of the method used to form the emulsion, its temperature prior to step (c) is preferably -20 to +50 ˚C, more preferably -10 to +40 ˚C, yet more preferably -5 to 30 ˚C, and still more preferably 0 to 20 ˚C. Suitable temperature is dependent on the solvents used.

In step (c) of the process of the invention the catalyst system is solidified from the droplets of the dispersed phase.

According to the present invention the solidification is affected by evaporating solvent (A-1), preferably toluene with an inert gas, like argon, yielding solid, spherical catalyst particles. Choosing the parameters, like temperature, inert gas flow and the like for performing the evaporation lies within the common knowledge and skill of art skilled person. The effectiveness of evaporation can be enhanced by increasing the mixing speed, the inert gas flow rate and temperature.

This simplified way of solidification has the advantage that emulsification and solidification can be done in one vessel.

The catalyst system, i.e. the solid, spherical catalyst particles, may then be optionally washed and/or dried to remove any solvent residuals present in the particles. The washing and/or drying of the catalyst particles may be carried out in any manner conventional in the art.

For further details, embodiments and examples of the emulsion formation method reference is made e.g. to the international patent application WO 03/051934.

The above defined process leads also to new catalyst system as defined in more detail below.

Accordingly the present invention is also directed to a catalyst system, preferably obtainable, more preferably obtained, by the process as described above, comprising

(a) a transition metal compound of formula (I)

$$L_m R_n M X_q \qquad (I)$$

wherein

"M" is a transition metal of anyone of the groups 3 to 10 of the periodic table (IUPAC 2007),
each "X" is independently a monovalent anionic σ-ligand,
each "L" is independently an organic ligand which coordinates to the transition metal (M),
"R" is a bridging group linking said organic ligands (L),
"m" is 2 or 3, preferably 2,
"n" is 0, 1 or 2, preferably 1,
"q" is 1, 2 or 3, preferably 2,
m+q is equal to the valency of the transition metal (M),

and
(b) a cocatalyst (Co) comprising an element (E) of group 13 of the periodic table (IUPAC), preferably a cocatalyst (Co) comprising a compound of Al,

wherein the catalyst system has a mean particle size of 1 to 500 $\mu$m, more preferred 5 to 200 $\mu$m, still more preferred 10 to 100 $\mu$m, measured by image analysis out of light microscope images.

According to the method of the invention it is possible to get catalyst particles with a very small particle size, e.g. a mean particle size of 10 to 40 $\mu$m and with a very narrow particle size distribution. Furthermore the obtained particles are very spherical and have a smooth surface.

Preferred transition metal compounds of formula (I) and cocatalysts (Co) are those as defined above.

Additionally the inventive catalyst system is featured by the fact that it is self-supported, i.e. it does not comprise any catalytically inert support material, such as organic and inorganic support materials, like silica, MgCl$_2$ or porous polymeric material. As a consequence that the catalyst system is self-supported it has a rather low surface area as defined in further detail below. Thus, it should be noted that the polymer produced by using the catalyst produced according to the invention does not contain any silica residues.

Further, the catalyst system does not contain any residues of undesired surfactants due to the inventive preparation method avoiding the use of such surfactants.

The obtained catalyst particles have a low surface area and have a compact structure, i.e. low porosity with high bulk density resulting in, due to the replica effect, polymers with high density bulk density.

The present invention is further related to the use of the above defined catalyst system for olefin polymerisation to yield polyolefins and the polyolefins produced with such a catalyst system.

Suitable polyolefins comprise polyethylene and polypropylene homopolymers, and also polyethylene, polypropylene and polypropylene/ethylene copolymers comprising from 0 to 40 wt% of C$_2$-olefin or C$_3$ to C$_{30}$-alpha-olefin or C$_4$ to C$_{30}$-diene-derived units, and more particularly a copolymer or terpolymer of ethylene and/or propylene with 0 to 10 wt % alkenes, for example ethylene, 1-propene, 1-butene, 1-pentene, 4-methyl-pent-1-ene, 1-hexene, cyclohexene, 1-octene and norbornene, or dienes, for example butadiene, hexadiene or octadiene.

In a preferred embodiment the polyolefins produced by using the catalyst according to the invention are propylene polymers.

Depending on polymerisation process configuration the polymers produced can be uni- or multimodal, like bimodal.

In addition, the present invention is related to the process for producing the polyolefins, whereby the catalyst system as defined above is employed.

Any method of olefin polymerisation - for example, a gas phase, slurry phase, solution polymerisation process or any combinations thereof - that is known for the polymerisation of olefins to form polyolefins in combination with the catalysts system of the invention can be used.

Polymerisation can be a one stage or a two or multistage polymerisation process, carried out in at least one polymerisation reactor. Typical polymerisation reactors include slurry and gas phase reactors. Thus polymerisation can be carried out in a combination of at least two reactors, in some cases at least three reactor are used, e.g. gas phase/gas phase, slurry phase/slurry phase, slurry phase/gas phase or slurry phase/gas phase/gas phase processes; slurry phase/gas phase or slurry phase/gas phase/gas phase polymerisation being preferred ones.

In addition to the actual polymerisation the process configuration can comprise any pre- or post reactors.

The catalyst system according to the invention may be introduced into the polymerisation reactor by any suitable means as is known in the art regardless of the type of polymerisation reactor used.

Generally the quantity of catalyst system used will depend upon the nature of the catalyst system, the reactor types and conditions and the properties desired for the polymer product. Conventional catalyst quantities, such as described in the publications referred herein, may be used.

The reactor setup is not particularly limited and can be any reactor setup known to the skilled person.

## 1. Methods

The following definitions of terms and determination methods apply for the above general description of the invention as well as to the below examples unless otherwise defined.

### Catalyst activity/catalyst productivity

A 5 litre stainless steel reactor was used for propylene polymerisations. 1100 g of liquid propylene (Borealis polymerisation grade) was fed to the reactor. 0.2 ml of triethylaluminum (100%, purchased from Crompton) was fed as a scavenger and 15 mmol hydrogen as chain transfer agent. The reactor temperature was set to 30 ˚C. The catalyst was flushed into to the reactor with nitrogen overpressure. The reactor was heated up to 70 ˚C in a period of 15 minutes. After polymerisation for 30 minutes the remaining propylene was flushed out and the polymer was dried and weighed.

Polymer yield (based on 30 min polymerisation) is determined. Catalyst activity is polymer yield [kg] divided by catalyst amount [g]. Catalyst productivity is catalyst activity divided by time [hours].

### ICP analysis

The elemental analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilize for two hours.

The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$, 3 % HF in DI water), a low standard (10 ppm Al in a solution of 5 % $HNO_3$, 3 % HF in DI water), a high standard (50 ppm Al, 50 ppm Hf, 20 ppm Zr in a solution of 5 % $HNO_3$, 3 % HF in DI water) and a quality control sample (20 ppm Al, 20 ppm Hf, 10 ppm Zr in a solution of 5 % $HNO_3$, 3 % HF in DI water).

The content of hafnium was monitored using the 282.022 nm and 339.980 nm lines and the content for zirconium using 339.198 nm line. The content of aluminium was monitored via the 167.081 nm line, when Al concentration in ICP sample was between 0-10 ppm and via the 396.152 nm line for Al concentrations between 10-100 ppm.

The reported values, required to be between 0 and 100, or further dilution is required, are an average of three successive aliquots taken from the same sample and are related back to the original catalyst using equation 1.

$$C = \frac{R \times V}{M} \qquad \text{Equation 1}$$

wherein

C is the concentration in ppm, related to % content by a factor of 10,000
R is the reported value from the ICP-AES
V is the total volume of dilution in ml
M is the original mass of sample in g
If dilution was required then this also needs to be taken into account by multiplication of C by the dilution factor.

### PSD

Particle size distribution (PSD) and the average particle sizes were determined by static image analysis. A system comprising of a Zeiss Axioplan light microscope equipped with a Flea2 Digital camera from Point Grey Research Inc., a motorised XY-stage from Märzhäuser with Corvus controller and a PC was used to acquire images of catalyst particles dispersed in oil on glass slides. Calibration of the system was performed with a stage micrometer (2mm, with 0.01 mm divisions).

A suspension of approximately 2 to 3 wt.-% of the catalyst in oil was prepared for the analysis. After homogenising the suspension three samples were deposited on separate microscope slides and covered with a cover glass. The slides were placed on the microscope stage and a magnification of 10x (numerical aperture 0.30) was chosen to obtain approximately 10 to 20 particles in the measurement frame. Illumination was adjusted to give a light background and the microscope was focused on the sample particles. For each slide approximately 500 images were scanned in a raster pattern and stored. Using image analysis software the images were processed and analysed. For each image the isolated particles which did not overlap the image edges were counted and their area, equivalent circular diameter and other parameters recorded. In total, a minimum of 15 000 particles were counted. For the final results, the particles from all images were grouped in to size classes and presented as a histogram. Size classes were determined by

$$\frac{x_i}{x_{i-1}} = 1{,}0977,$$ where $x_i$ is the upper and $x_{i-1}$ the lower particle size of the $i$th size class. Particles assigned to a given size class have a diameter that is equal to or greater than $x_{i-1}$ and less than $x_i$. The particles size distribution, variance of particle size distribution and average particle sizes ($\bar{x}_{1,0}$, $\bar{x}_{2,0}$, $\bar{x}_{3,0}$, $\bar{x}_{1,2}$ and $\bar{x}_{1,3}$) were calculated according to ISO 9276-1:1998(E) and ISO 9276-2:2001 (E).

**Chemicals**

- MAO was purchased from Albermarle and used as a 30 wt-% solution in toluene.

- PFPE Krytox® GPL 106 from E. I. du Pont de Nemours and Company, Wilmington, Delaware, dried under vacuum for several hours at 100˚C prior to use.

- PFPE Krytox® GPL 102 from E. I. du Pont de Nemours and Company, Wilmington, Delaware dried under vacuum for several hours at 100˚C prior to use.

- *rac*-cyclohexyl(methyl)silanediyl-bis(2-methyl-4-(4'-tert-butyl-phenyl)inden-1-yl) zirconium dichloride from Boulder Scientific company (CAS Registry Number 888227-55-2)

- Propylene was provided by Borealis and adequately purified before use. Triethylaluminum was purchased from Crompton and used in pure form. Hydrogen is provided by AGA and purified before use.

All the chemicals and chemical reactions were handled under an inert gas atmosphere using Schlenk and glovebox techniques, with oven-dried glassware, syringes or needles.

**2. Examples:**

**Example 1: Preparation of catalyst solution (A)**

A catalyst solution was formed by reaction of 0.14 mg of rac-cyclohexyl(methyl)silanediyl-bis(2-methyl-4-(4'-tert-butyl-phenyl)inden-1-yl) zirconium dichloride per 1 mL of a 30 wt-.% MAO solution in toluene by mixing the complex and MAO at room temperature for 0.5h. Al/Zr was 260 mol/mol.

**Example 2: Preparation of catalyst system**

3 mL of a catalyst solution (A) prepared according to Example 1 where added to 20 mL of Krytox® GPL 106 into a 50 mL emulsification glass reactor equipped with "open baffles" and an overhead stirrer below the surface of the oil. Then mixing started for 15 min with a tip speed of 1.5 m/s (mixing speed 500 rpm).

Afterwards toluene evaporation with argon started. Argon flushing was continued for 360 min before mixing was stopped and the remaining catalyst/oil slurry was siphoned into a septa bottle.

PSD: 10-40 μm

Average particle size: 24 $\mu$m (median by vol)
The catalyst productivity was 34 kg PP/gcat•h.

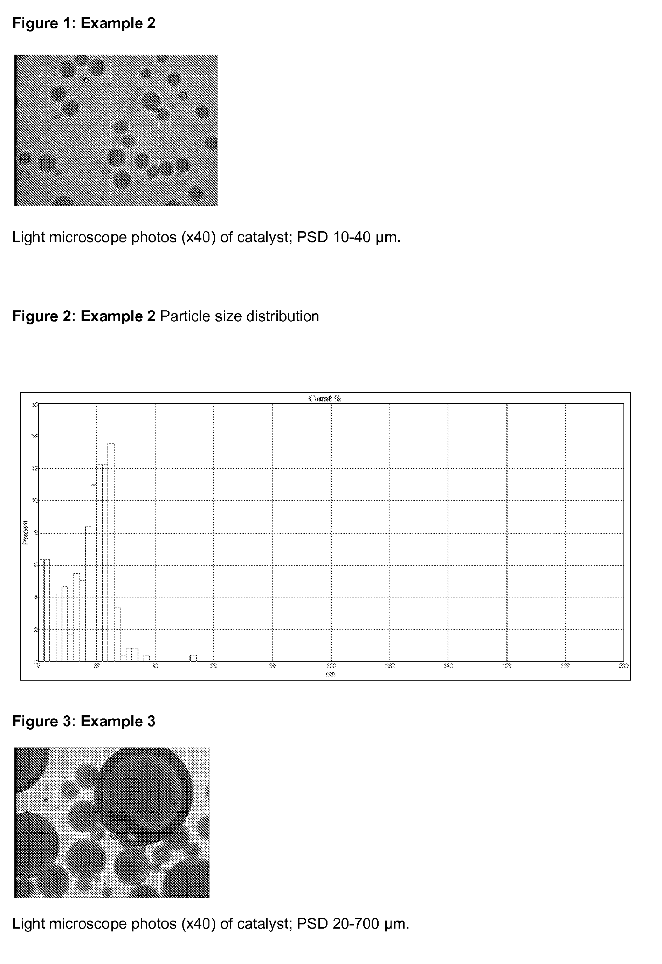

As can be seen from Figure 1 and Figure 2, with the method according to the present invention it is possible to prepare catalyst with perfect spherical shape and smooth surface and narrow particle size distribution.

### Example 3: Preparation of catalyst system

3 mL of a catalyst solution (A) prepared according to Example 1 where added to 20 mL of Krytox® GPL 102 into a 50 mL emulsification glass reactor equipped with "open baffles" and an overhead stirrer on top of the surface of the oil. Then mixing started for 10 min with a tip speed of 0.75 m/s.
Afterwards toluene evaporation with argon started. Argon flushing was continued for 210 min before mixing was stopped and the remaining catalyst/oil slurry was siphoned into a septa bottle.
From Figure 3 it can be seen that again catalyst particles with perfect spherical shape and smooth surface are produced with the method according to the present invention

### Claims

1. Process for the preparation of a solid olefin polymerisation catalyst system, comprising an organometallic compound of a transition metal of Group 3 to 10 of the Periodic Table (IUPAC 2007) in the form of solid particles comprising the steps of

    a) preparing a solution (A) comprising

        a1) a transition metal compound of formula (I)

$$L_mR_nMX_q \qquad (I)$$

        wherein

            "M" is a transition metal of anyone of the groups 3 to 10 of the periodic table (IUPAC 2007), preferably a transition metal of anyone of the groups 4 to 6 of the periodic table (IUPAC 2007), more preferably titanium (Ti), zirconium (Zr) or hafnium (Hf), i.e. zirconium (Zr) or hafnium (Hf),
            each "X" is independently a monovalent σ-ligand,
            each "L" is independently an organic ligand which coordinates to the transition metal (M),
            "R" is a bridging group linking said organic ligands (L),
            "m" is 2 or 3, preferably 2,
            "n" is 0, 1 or 2, preferably 1,
            "q" is 1, 2 or 3, preferably 2,
            m+q is equal to the valency of the transition metal (M),

        a2) a cocatalyst comprising an element of group 13 of the Periodic Table (IUPAC 2007), preferably a cocatalyst (Co) comprising a compound of Al and
        a3) a solvent (A-1),

    b) preparing a liquid/liquid emulsion system by dispersing the solution (A) in a solvent (B) wherein

        b1) the solvent (B) constitutes the continuous phase of the emulsion and comprises a nonreactive fluorinated synthetic oil having a viscosity at 20˚C according to ASTM D445 of at least 10 cSt,
        b2) the solution (A) constitutes in the form of droplets the dispersed phase and
        b3) the transition metal compound of formula (I) and the cocatalyst (Co) are present in the droplets,

    c) solidifying said droplets to obtain solid particles and
    d) optionally recovering said particles to obtain said catalyst system.

2. Process according to claim 1, wherein

(a) the ligands (X) are independently selected from the group consisting of hydrogen, halogen, $C_1$ to $C_{20}$ alkyl, $C_1$ to $C_{20}$ alkoxy, $C_1$ to $C_{20}$ alkenyl, $C_1$ to $C_{20}$ alkinyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", -PR"$_3$, -SiR"$_3$, -OSiR"$_3$ and -NR"$_2$, wherein each R" is independently hydrogen, $C_1$ to $C_{20}$ alkyl, $C_1$ to $C_{20}$ alkenyl, $C_1$ to $C_{20}$ alkinyl, $C_3$ to $C_{12}$ cycloalkyl or $C_6$ to $C_{20}$ aryl, and/or

(b) at least one organic ligand (L), is independently selected from the group consisting of unsubstituted cyclopentadienyl ligand, substituted cyclopentadienyl ligand, unsubstituted indenyl ligand, substituted indenyl ligand, unsubstituted fluorenyl ligand and substituted fluorenyl ligand.

3.  Process according to claim 1 or 2, wherein

    (a) transition metal (M) is zirconium (Zr) hafnium (Hf), or titanium (Ti), preferably zirconium (Zr) or hafnium (Hf), and/or
    (b) the bridging group(s) (R) has(have) the formula (II)

    $$-Y(R')(R'')- \qquad (II)$$

    wherein

    Y is C, Si or Ge, and
    R', R" are independently selected from the group consisting of is $C_1$ to $C_{20}$ alkyl, $C_4$ to $C_{10}$ cycloalkyl, $C_6$ to $C_{12}$ aryl, $C_7$ to $C_{12}$ arylalkyl, or trimethylsilyl.

4.  Process according to anyone of the preceding claims, wherein at least one organic ligand (L) comprises one or more residues independently selected from the group consisting of halogen, $C_1$ to $C_{20}$ alkyl, $C_1$ to $C_{20}$ alkenyl, $C_1$ to $C_{20}$ alkinyl, $C_3$ to $C_{12}$ cycloalkyl, $C_5$ to $C_{20}$ cycloalkyl substituted $C_1$ to $C_{20}$ alkyl wherein the cycloalkyl residue is substituted by $C_1$ to $C_{20}$ alkyl, $C_6$ to $C_{20}$ aryl, $C_7$ to $C_{20}$ arylalkyl, $C_3$ to $C_{12}$ cycloalkyl which contains 1, 2, 3 or 4 heteroatom(s) in the ring moiety, $C_6$ to $C_{20}$ heteroaryl and $C_1$ to $C_{20}$ haloalkyl.

5.  Process according to anyone of the preceding claims, wherein the co-catalyst (Co) is a trialkylaluminium and/or aluminoxane compound.

6.  Process according to anyone of the preceding claims, wherein the nonreactive fluorinated synthetic oil has a viscosity at 20°C according to ASTM D445 of at least 10 cSt up to 2000 cSt, preferably of at least 30 cSt up to 1600 cSt.

7.  Process according to anyone of the preceding claims, wherein

    (a) the solvent (A-1) is an aromatic hydrocarbon, preferably toluene, and/or
    (b) the solvent (B) is a perfluoropolyether, a polytrichlorofluoroethylene, a fluorosilicone, or combinations thereof, having a viscosity at 20°C according to ASTM D445 of at least 10 cSt up to 2000 cSt, preferably of at least 30 cSt up to 1600 cSt.

8.  Process according to anyone of the preceding claims, wherein solvent (B) is a perfluoropolyethers having the formula:

    $$CF_3-(CF_2)_2-O-[CF(CF_3)-CF_2-O]s-Rf \qquad (I),$$

    $$F[CF(CF_3)CF_2O]xCF_2CF_3 \qquad (II)$$

    $$CF_3O[CF_2CF(CF_3)-O-]m(CF_2-O-)n-R^1f \qquad (III),$$

    $$F-[(CF_2)_3-O]t-R^2f \qquad (IV),$$

    $$CF_3O(CF_2CF_2-O-)p(CF_2-O)qCF_3 \qquad (V),$$

    $$CF_3O[CF_2CF(CF_3)O]m(CF_2CF_2O)o(CF_2O)n-R^1f \qquad (VI),$$

or combinations of two or more thereof; wherein

s is an integer from 2-100; Rf is CF2CF3, a C3 to C6 perfluoroalkyl group, or combinations thereof; x is an integer from 10 to 60; $R^1f$ is CF3, C2F5, C3F7, or combinations of two or more thereof; (m+n) is 8-45, inclusive; (m+n+o) is 8-45, inclusive; m/n is 20-1000, inclusive; o is >1 $R^2f$ is CF3, C2F5, or combinations thereof; t is 2-200, inclusive; (p+q) is 40-180, inclusive; and p/q is 0.5-2, inclusive, provided that the perfluoropolyether has a viscosity at 20° according to ASTM D445 of at least 10 cSt up to 2000 cSt.

9.  Process according to claim 7, wherein the perfluoropolyether has the formula (I) or (II).

10. Process according to anyone of the preceding claims, wherein in step c) the solidification is affected by evaporating solvent (A-1) with an inert gas.

11. Process according to claim 10, wherein the solidification step c) is done in the same vessel as the emulsification step b)

12. Catalyst system obtainable, preferably obtained, by a process as defined in any one of the claims 1 to 11.

13. Use of a catalyst system as defined in claim 12 in polypropylene polymerisation.

14. Use of a perfluoropolyether as defined in any one of the claims 7 to 9 as solvent for forming the continuous phase of an emulsion.

**Figure 1: Example 2**

Light microscope photos (x40) of catalyst; PSD 10-40 μm.

**Figure 2: Example 2** Particle size distribution

**Figure 3: Example 3**

Light microscope photos (x40) of catalyst; PSD 20-700 μm.

EP 2 385 073 A1

Europäisches
Patentamt
European
Patent Office
Office européen
des brevets

**EUROPEAN SEARCH REPORT**

Application Number

EP 10 16 2257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 878 755 A1 (BOREALIS TECH OY [FI])<br>16 January 2008 (2008-01-16)<br>* paragraph [0142] *<br>* paragraph [0144] *<br>* paragraph [0149] * | 1-6,10,<br>11,13<br>7-9,14 | INV.<br>C08F10/00<br>C08F4/6592 |
| X | WO 2006/069733 A1 (BOREALIS TECH OY [FI];<br>BARTKE MICHAEL [FI]; DENIFL PETER [AT])<br>6 July 2006 (2006-07-06)<br>* page 23 - page 24 * | 1-6,<br>11-13 | |
| Y | EP 0 255 790 A1 (MONTEDISON SPA [IT])<br>10 February 1988 (1988-02-10)<br>* page 3, line 36 - page 4, line 35 * | 7-9,14 | |
| Y | EP 0 258 089 A1 (MONTEDISON SPA [IT])<br>2 March 1988 (1988-03-02)<br>* page 10 - page 12; examples 1-2 * | 7-9,14 | |
| X,D | WO 03/051934 A2 (BOREALIS TECH OY [FI];<br>DENIFL PETER [AT]; VAN PRAET ERIK [SE];<br>BARTKE) 26 June 2003 (2003-06-26) | 12,13 | TECHNICAL FIELDS<br>SEARCHED (IPC) |
| A | * page 32 - page 33 *<br>* page 1, line 12 - line 16 * | 1-11,14 | C08F |

The present search report has been drawn up for all claims

| Place of search | Date of completion of the search | Examiner |
|---|---|---|
| The Hague | 26 May 2010 | Parry, Julian |

**EP 2 385 073 A1**

## ANNEX TO THE EUROPEAN SEARCH REPORT
## ON EUROPEAN PATENT APPLICATION NO.

EP 10 16 2257

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2010

| Patent document cited in search report | | | Publication date | Patent family member(s) | | | Publication date |
|---|---|---|---|---|---|---|---|
| EP 1878755 | A1 | | 16-01-2008 | CN | 101479300 | A | 08-07-2009 |
| | | | | EP | 2041187 | A2 | 01-04-2009 |
| | | | | WO | 2008006609 | A2 | 17-01-2008 |
| | | | | US | 2009292089 | A1 | 26-11-2009 |
| WO 2006069733 | A1 | | 06-07-2006 | AU | 2005321510 | A1 | 06-07-2006 |
| | | | | BR | PI0519648 | A2 | 14-07-2009 |
| | | | | CN | 101111316 | A | 23-01-2008 |
| | | | | EA | 200701383 | A1 | 28-02-2008 |
| | | | | KR | 20070104895 | A | 29-10-2007 |
| | | | | US | 2009012247 | A1 | 08-01-2009 |
| EP 0255790 | A1 | | 10-02-1988 | CA | 1293588 | C | 24-12-1991 |
| | | | | DE | 3765351 | D1 | 08-11-1990 |
| | | | | US | 4804798 | A | 14-02-1989 |
| EP 0258089 | A1 | | 02-03-1988 | CA | 1304344 | C | 30-06-1992 |
| | | | | DE | 3765723 | D1 | 29-11-1990 |
| | | | | US | 4855272 | A | 08-08-1989 |
| WO 03051934 | A2 | | 26-06-2003 | AU | 2002366265 | A1 | 30-06-2003 |
| | | | | BR | 0214895 | A | 14-12-2004 |
| | | | | CA | 2468881 | A1 | 26-06-2003 |
| | | | | CN | 1871264 | A | 29-11-2006 |
| | | | | EP | 1323747 | A1 | 02-07-2003 |
| | | | | HU | 0402484 | A2 | 29-03-2005 |
| | | | | JP | 2005511866 | T | 28-04-2005 |
| | | | | TW | 229092 | B | 11-03-2005 |
| | | | | US | 2008275200 | A1 | 06-11-2008 |
| | | | | US | 2005054518 | A1 | 10-03-2005 |
| | | | | US | 2008064835 | A1 | 13-03-2008 |

EPO FORM P0459

For more details about this annex : see Official Journal of the European Patent Office, No. 12/82

18

**EP 2 385 073 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03051934 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 9613529 A
- WO 0170395 A
- WO 9710248 A
- WO 9941290 A
- WO 9910353 A
- WO 02060963 A
- WO 9428034 A
- WO 2007082046 A
- US 2007049502 A
- US 6528457 B
- WO 0018849 A

**Non-patent literature cited in the description**

- **SEVERN et al.** *Chem. Rev.,* 2005, vol. 105 (11), 4073-4147
- **SEVERN.** Handbook Tailor-Made Polymers: Via Immobilization of Alpha-Olefin Polymerisation Catalysts
- **V. C. GIBSON et al.** *Angew. Chem. Int. Ed., engl.,* 1999, vol. 38, 428-447
- **V. C. GIBSON.** *Angew. Chem. Int. Ed., engl.,* 1999, vol. 38, 428-447